# EUROPEAN PATENT SPECIFICATION

(11) **EP 3 183 933 B1**
(45) Date of publication and mention of the grant of the patent: **01.01.2020**
(21) Application number: 14753076.0
(22) Date of filing: 19.08.2014
(51) Int. Cl.: H04W 74/08

(54) **COLLISION AVOIDANCE WITH SYNCHRONIZED TRANSMISSION**
KOLLISIONSVERMEIDUNG MIT SYNCHRONISIERTER ÜBERTRAGUNG
ÉVITEMENT DE COLLISION AVEC UNE TRANSMISSION SYNCHRONISÉE

(43) Date of publication of application: 28.06.2017
(73) Proprietor: Telefonaktiebolaget LM Ericsson (publ), 164 83 Stockholm (SE)
(72) Inventor: FALCONETTI, Laetitia, 52064 Aachen (DE); CHENG, Jung-Fu, Fremont, CA 94539 (US); FURUSKÄR, Anders, S-113 46 Stockholm (SE); GODANA, Bruhtesfa, S-112 44 Stockholm (SE); KOUTSIMANIS, Chrysostomos, S-112 19 Stockholm (SE); MILDH, Gunnar, S-192 55 Sollentuna (SE)
(74) Representative: Ericsson
(86) International application number: PCT/EP2014/067691
(87) International publication number: WO 2016/026521

(56) References cited:
- WO-A1-2010/150143
- US-A1- 2009 086 706
- HU JIN ET AL: "MAC 19-5 - Performance Comparison of Uplink WLANs with Single-User and Multi-User MIMO Schemes", WIRELESS COMMUNICATIONS AND NETWORKING CONFERENCE, 2008. WCNC 2008. IEEE, IEEE, PISCATAWAY, NJ, USA, 31 March 2008 (2008-03-31), pages 1854-1859, XP031243915, ISBN: 978-1-4244-1997-5
- NTT DOCOMO ET AL: "Views on LAA for Unlicensed Spectrum - Scenarios and Initial Evaluation Res", 3GPP DRAFT; RWS-140026 LTE-U SCENARIOS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. Sophia Antipolis, France; 20140613 5 June 2014 (2014-06-05), XP050868301, Retrieved from the Internet: URL:http://www.3gpp.org/ftp/workshop/2014- 06-13_LTE-U/Docs/ [retrieved on 2014-06-05]
- CISCO SYSTEMS: "Co-existence considerations for LTE-U", 3GPP DRAFT; RWS-140025_CO-EXISTENCE CONSIDERATIONS FOR LTE-U, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. Sophia Antipolis, France; 20140613 6 June 2014 (2014-06-06), XP050774771, Retrieved from the Internet: URL:http://www.3gpp.org/ftp/Meetings_3GPP_ SYNC/2014-06-13_LTE-U/Docs/ [retrieved on 2014-06-06] cited in the application

## Description

### Technical Field

The present invention relates to methods for managing a communication network and to corresponding devices.

### Background

In communication networks, it is generally desirable to efficiently utilize transmission resources. For example, some cellular communication systems, such like GSM (Global System for Mobile Communications) provide a frequency reuse larger than one. This means that adjacent cells of the same network do not use the same frequency band, and therefore do not interfere with each other. However, cells sufficiently far away from each other may use the same frequency resources. This way, a moderate level of inter-cell interference is guaranteed, while at the same time allowing reuse of the frequency resources.

While usage of cellular networks increases, available transmission resources tend to become more and more scarce. Accordingly, cellular technologies like the LTE (Long Term Evolution) technology specified by 3GPP (3rd Generation Partnership Project) have been developed to operate under conditions of high interference. The LTE technology may utilize a number of techniques to cope with high interference levels. For instance multiple antenna techniques may be used to improve the effective SINR (Signal to Noise Ratio) by increasing signal diversity and utilizing receiver side interference mitigation capabilities. Further, link adaptation may be used to make the transmission robust towards interference. For the link adaptation, modulation and coding schemes (MCS) may be selected so as to guarantee a maximum block error probability (BLER) for a given SINR. When the SINR is low due to interference, a robust MCS may be used for transmission. When SINR is high, a higher order MCS may be selected to obtain the largest possible data rate at a wanted BLER. The BLER is typically set to 10%, sometimes even larger. This means that certain transmissions cannot be decoded correctly at the receiver. For such cases, a HARQ (Hybrid Automatic Request) protocol may be used as an error-recovery mechanism. By means of a HARQ retransmission the originally transmitted signal can be recovered in a short delay.

The above-mentioned robustness with respect to interference enables reuse of the same time-frequency resources in adjacent cells of the same network. This is called a reuse of one. Studies show that the achieved system capacity with a reuse of one is much higher than with separate time-frequency resources in adjacent cells.

To further improve availability of transmission resources, usage of transmission resources from an unlicensed spectrum was suggested. In the LTE technology, it is possible to aggregate carriers from different frequency bands for the same UE (User Equipment). In a concept referred to as LA-LTE (Licensed-assisted access LTE), aggregation of a carrier from a licensed spectrum with a carrier from an unlicensed spectrum is considered.

For the operation of the carrier in the unlicensed spectrum, additional mechanisms may be provided to ensure fair coexistence with other systems that may transmit in the same unlicensed band. For example, nodes of an LA-LTE network may need to coexist well with nodes of a WiFi network utilizing the same carrier. Further, the nodes of an LA-LTE network may need to coexist with nodes of a different LA-LTE network utilizing the same carrier. In 3GPP contribution RWS-140025 "Co-existence considerations for LTE-U", by Cisco Systems, 3GPP workshop on LTE in unlicensed spectrum, June 13, 2014, Sophia Antipolis, France, it is suggested to utilize a random backoff during channel access for enabling fair resource sharing in the unlicensed spectrum.

The random backoff defines a time period which a node has to wait after sensing that a channel has become free, before transmitting on the channel. By means of the random backoff, it can be ensured that two or more nodes backing off do not start transmitting at the same time.

By utilizing a random backoff mechanism, collision between an LA-LTE network and another network utilizing the same carrier, e.g., a WiFi or other LA-LTE network, can be avoided. However, the usage of of the random backoff mechanism may also block possible usage of the carrier by certain nodes. For example, interfering transmissions of LA-LTE nodes of the same network may be possible due to the above-mentioned techniques of coping with high interference levels, but usage of the random backoff mechanism may result in such transmissions being prevented in the same way as other colliding usage of the carrier.

Accordingly, there is a need for techniques which allow for efficiently controlling transmission in a communication network in view of efficient usage of transmission resources.

The document "Performance Comparison of Uplink WLANs with Single-User and Multi-User MIMO Schemes" by Hu Jin et al, published in IEEE Wireless Communications and Networking Conference 2008 proceedings, compares the performance of wireless local area networks with single-user MIMO and multi-user MIMO in terms of collision probability, average throughput, and delay.

The document US 2009/086706 A1 provides a cross-layer multi-packet reception media access control and resource allocation technique for wireless networks having receivers with multiple antennas.

### Summary

According to the present invention, methods for controlling transmission in a communication network as set forth in claims 1 and 12, a communication device as set forth in claim 15 and a communication network as set forth in claim 16 are provided. Embodiments of the invention are claimed in the dependent claims.

According to an embodiment of the invention, a method of controlling transmission in a communication network is provided. According to the method, a communication device detects potentially colliding usage of transmission resources. Further, the communication device detects cease of the potentially colliding usage of the transmission resources. After expiry of a backoff time period starting when detecting the cease of the usage of the transmission resources, the communication device performs a transmission on the transmission resources. This transmission is performed synchronously with a further transmission on the transmission resources by at least one other communication device.

According to a further embodiment of the invention, a method of controlling transmission in a communication network is provided. According to the method, a node of the communication network provides control information to multiple communication devices. These communication devices perform transmissions on transmission resources after a backoff time period starting when detecting cease of potentially colliding usage of the transmission resources. The control information enables synchronization of the transmissions by the communication devices.

According to a further embodiment of the invention, a communication device is provided. The communication device comprises at least one interface for transmission on transmission resources. Further, the communication device comprises at least one processor. The at least one processor is configured to detect potentially colliding usage of the transmission resources and detect cease of the potentially colliding usage of the transmission resources. Further, the at least one processor is configured to, after expiry of a backoff time period starting when detecting the cease of the usage of the transmission resources, perform a transmission on the transmission resources synchronously with a further transmission on the communication transmission resources by at least one other communication device.

According to a further embodiment of the invention, a node for a communication network is provided. The node comprises an interface for controlling multiple communication devices. Further, the node comprises at least one processor. The at least one processor is configured to provide control information to the multiple communication devices. The multiple communication devices are configured to perform transmissions on transmission resources after a backoff time period starting when detecting cease of potentially colliding usage of the transmission resources. The control information enables synchronization of the transmissions by the multiple communication devices.

According to a further embodiment of the invention, a computer program or computer program product is provided, e.g., in the form of a non-transitory storage medium, which comprises program code to be executed by at least one processor of a communication device. Execution of the program code causes the at least one processor to detect potentially colliding usage of transmission resources and detect cease of the potentially colliding usage of the transmission resources. Further, execution of the program code causes the at least one processor to, after expiry of a backoff time period starting when detecting the cease of the usage of the transmission resources, perform a transmission on the transmission resources synchronously with a further transmission on the communication transmission resources by at least one other communication device.

According to a further embodiment of the invention, a computer program or computer program product is provided, e.g., in the form of a non-transitory storage medium, which comprises program code to be executed by at least one processor of a node of a communication network. Execution of the program code causes the at least one processor to provide control information to multiple communication devices. The multiple communication devices are configured to perform transmissions on transmission resources after a backoff time period starting when detecting cease of potentially colliding usage of the transmission resources. The control information enables synchronization of the transmissions by the multiple communication devices.

Details of such embodiments and further embodiments will be apparent from the following detailed description of embodiments.

### Brief Description of the Drawings

Fig. 1 schematically illustrates a communication network in which transmissions may be controlled according to an embodiment of invention.
Fig. 2 schematically illustrates an exemplary scenario in which transmissions are synchronized according to an embodiment of the invention.
Fig. 3 schematically illustrates pseudo-random generation of a backoff time period as utilized according to an embodiment of the invention.
Fig. 4 schematically illustrates a further exemplary scenario in which transmissions are synchronized according to an embodiment of the invention.
Fig. 5 schematically illustrates a further exemplary scenario in which transmissions are synchronized according to an embodiment of the invention.
Fig. 6 schematically illustrates a further exemplary scenario in which transmissions are synchronized according to an embodiment of the invention.
Fig. 7 shows a flowchart for illustrating a method according to an embodiment of the invention.
Fig. 8 shows a flowchart for illustrating a further method according to an embodiment of the invention.
Fig. 9 schematically illustrates structures of a communication device according to an embodiment of the invention.
Fig. 10 schematically illustrates structures of a control node according to an embodiment of the invention.

### Detailed Description of Embodiments

In the following, concepts according to embodiments of the invention will be explained in more detail by referring to the accompanying drawings. The illustrated concepts relate to control of transmissions in a communication network. Specifically, the concepts relate to efficiently controlling avoidance of colliding usage of transmission resources. The communication network may for example be based on one or more radio technologies, e.g., a cellular radio technology such as the LTE technology. If the communication network is based on a radio technology, the transmission resources may be frequency resources, such as one or more carriers. Although the examples explained in the following refer to a cellular network based on the LTE technology, it is to be understood that the illustrated concepts could be also applied in connection with other communication technologies, e.g., other cellular radio technologies, such as UMTS (Universal Mobile Telecommunications System) technology, or a WiFi radio technology, or even wire-based technologies.

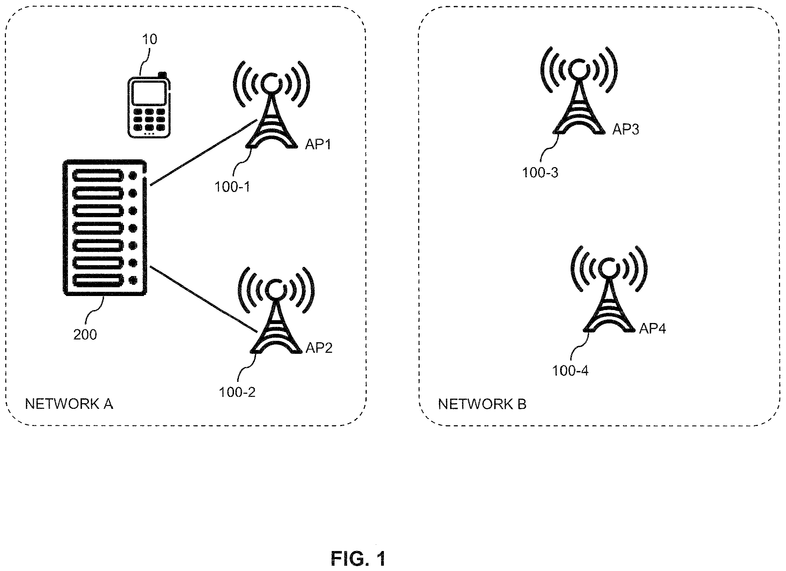

Fig. 1 schematically illustrates exemplary elements of the communication network. In Fig. 1, it is assumed that the communication network is partitioned into different subnetworks, referred to as network A and network B. For network A, exemplary nodes illustrated by Fig. 1 include a first access node 100-1 (AP1), a second access node 100-2 (AP2), a UE 10, and a control node 200 which is responsible for centralized control of the access nodes 100-1, 100-2 and the UE 10. For network B, exemplary nodes illustrated by Fig. 1 include a third access node 100-3 (AP3) and a fourth access node 100-4 (AP4). The access nodes 100-1, 100-2, 100-3, 100-4 may for example correspond to base stations, such as an eNB (evolved Node B) of the LTE technology. The UE 10 may for example correspond to a mobile phone, a smartphone, or some other kind of wirelessly connected device. In the following, the UE 10 and the access nodes 100-1, 100-2, 100-3, 100-4 will also be referred to as communication devices. The communication devices 10, 100-1, 100-2, 100-3, 100-4 are assumed to be configured for performing transmissions on the same transmission resources of the communication network. For example, these transmission resources may correspond to one or more carriers from an unlicensed frequency band, i.e., a frequency band which is not exclusively assigned to a certain network operator or radio technology. Such carrier may for example be used for establishing an SCell (Secondary Cell) in a carrier aggregation constellation of the LTE technology.

In some scenarios, these different networks may each correspond to an LA-LTE network. Within each of these LA-LTE networks, mutual interference among nodes of the LA-LTE network is considered to be tolerable. However, between nodes of different LA-LTE networks, interference is considered to be not tolerable. In other scenarios, the different networks may be based on different radio technologies. For example, network A could correspond to an LA-LTE network, while network B corresponds to a WiFi network.

In the concepts as illustrated in the following, it is assumed that a CSMA (Carrier Sense Multiple Access) based mechanism is applied for avoiding colliding usage of the transmission resources by multiple communication devices. The CSMA based mechanism involves that a communication device 10, 100-1, 100-2, 100-3, 100-4 detects whether there is potentially colliding usage of the transmission resources, i.e., whether the transmission resources are free or not. For example, this detection may involve measuring an energy level on a carrier of the transmission resources. If the sensed energy level is below a certain threshold, the transmission resources may be regarded as free, and the communication device 10, 100-1, 100-2, 100-3, 100-4 may proceed by performing a transmission on the transmission resources. If the energy level is above the threshold, this is regarded as indicating a potentially colliding usage of the transmission resources, and the communication device 10, 100-1, 100-2, 100-3, 100-4 defers a transmission on the transmission resources, but waits until cease of the potentially colliding usage is detected. The communication device 10, 100-1, 100-2, 100-3, 100-4 then further waits for at least a backoff time period before performing the transmission on the transmission resources. In this way, colliding usage of the transmission resources may be avoided. In addition, for some of the communication devices 10, 100-1, 100-2, 100-3, 100-4, performing the transmission after the backoff time period in a synchronous manner is allowed. In particular, those communication devices 10, 100-1, 100-2, 100-3, 100-4 for which mutual interference is tolerable are controlled to synchronously perform the transmission after the backoff time period. For example, in the scenario illustrated in Fig. 1 the access nodes 100-1 and 100-2 may perform the transmission after the backoff time period synchronously. By performing the transmissions synchronously, it is avoided that the transmissions are identified as potentially colliding usage of the transmission resources. Accordingly, efficient simultaneous utilization of the transmission resources is possible. In this connection, it is noted that the two transmissions may be regarded as synchronous if they start within a time interval which is shorter than a sensing time T_{S} required for detecting the potentially colliding usage of the transmission resources.

For managing the synchronous transmissions, the communication devices 10, 100-1, 100-2, 100-3, 100-4 may be assigned to the above-mentioned different subnetworks, e.g., to network A and network B as illustrated in Fig. 1. If colliding usage of the transmission resources by two of the communication devices 10, 100-1, 100-2, 100-3, 100-4 is deemed as tolerated, the two communication devices 10, 100-1, 100-2, 100-3, 100-4 may be assigned to the same subnetwork. If colliding usage of the transmission resources by two of the communication devices 10, 100-1, 100-2, 100-3, 100-4 is deemed as not tolerated, the two communication devices 10, 100-1, 100-2, 100-3, 100-4 may be assigned to different subnetworks. For assessing whether the colliding usage is tolerated or not, various criteria may be considered. For example, it can be taken into account whether one of the communication devices 10, 100-1, 100-2, 100-3, 100-4 would be able to decode signals transmitted by the other communication device 10, 100-1, 100-2, 100-3, 100-4. Further, it can be taken into account whether the communication devices 10, 100-1, 100-2, 100-3, 100-4 are associated with the same network operator, and colliding usage by communication devices associated with the same network operator may be deemed as tolerated. Further, the locations of the communication devices 10, 100-1, 100-2, 100-3, 100-4 may be taken into account. For example, if the two communication devices 10, 100-1, 100-2, 100-3, 100-4 are located far away from each other, the colliding usage may be deemed as tolerated. Further, if a mechanism exists to separate the transmissions by the two communication devices 10, 100-1, 100-2, 100-3, 100-4, e.g., a mechanism based on multiple receive antennas, the colliding usage may be deemed as tolerated.

The assignment of the communication devices 10, 100-1, 100-2, 100-3, 100-4 to the different subnetworks may be indicated implicitly, e.g., in terms of a network identity or node identity, such as a SSID (Service Set Identity), a BSSID (Basic Service Set Identity), or the like. Alternatively or in addition, the assignment may be indicated explicitly to the communication devices 10, 100-1, 100-2, 100-3, 100-4, e.g., in terms of dedicated identifiers of the subnetworks.

In the following, mechanisms for enabling the synchronization within one of the subnetworks, e.g., network A, will be explained in more detail.

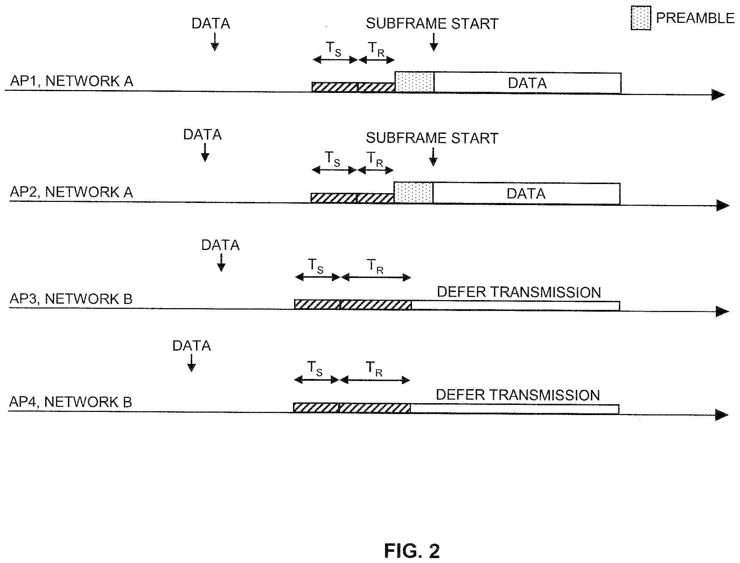

In some scenarios, the backoff time period applied by the communication device 10, 100-1, 100-2, 100-3, 100-4 may be determined on the basis of a pseudo-random value. In such cases, the synchronization may be achieved by coordinating generation of the backoff time period applied by each of the communication devices 10, 100-1, 100-2, 100-3, 100-4 in such a way that the communication devices 10, 100-1, 100-2, 100-3, 100-4 of the same subnetwork will apply the same backoff time period while the communication devices 10, 100-1, 100-2, 100-3, 100-4 from different subnetworks will apply different backoff time periods which are randomly determined. The latter randomness may help to avoid that concerning the access to the transmission resources the communication devices 10, 100-1, 100-2, 100-3, 100-4 of one subnetwork are favored over the communication devices 10, 100-1, 100-2, 100-3, 100-4 from the other subnetwork. A corresponding exemplary scenario is illustrated in Fig. 2.

The scenario of Fig. 2 involves the communication devices AP1, AP2, AP3, AP4, corresponding to the communication devices 100-1, 100-2, 100-3, 100-4 of Fig. 1. In the scenario of Fig. 2, after the arrival of data to be transmitted, the communication devices first check whether the transmission resources are free, as illustrated by the sensing time T_{S}. If the transmission resources are found to be free, the communication device waits for the backoff time period T_{R} before performing the transmission of data. In the scenario of Fig. 2, it is assumed that AP1 and AP2 are assigned to one subnetwork (network A) and that AP3 and AP4 are assigned to another subnetwork (network B). Within each subnetwork, the same pseudo-random backoff time period T_{R} is applied. That is to say, AP1 and AP2 apply the same pseudo-random backoff time period T_{R}, and AP3 and AP4 apply the same pseudo-random backoff time period T_{R}. In the illustrated example, the pseudo-random backoff time period T_{R} applied by AP1 and AP2 is smaller than the pseudo-random backoff time period T_{R} applied by AP3 and AP4. Accordingly, AP1 and AP2 synchronously start their respective transmission of data, while AP3 and AP4 defer their transmission of data. In the scenario of Fig. 2, the transmissions by AP1 and AP2 are synchronized to start in the same subframe, which in the LTE technology typically has a duration of 1 ms.

In order to ensure that the AP1 and AP2 (and also AP3 and AP4) apply the same pseudo-random backoff time period T_{R}, a centralized control node, such as the control node 200, could provide the pseudo-random backoff time periods to the different communication devices. For example, the control node 200 could generate the pseudo-random backoff time period T_{R} applied by AP1 and AP2, while another control node (not illustrated) could generate the pseudo-random backoff time period T_{R} applied by AP3 and AP4. In some cases, it is also possible that the same control node provides AP1 and AP2 with the same pseudo-random backoff time period T_{R}, and provides AP3 and AP4 with another pseudo-random backoff time period T_{R}.

Further, it can be utilized that typical algorithms for generating a random value produce a sequence of values which appears random, but in fact depends on an initial value of the algorithm, referred to as seed. The values not being perfectly random is reflected by the term "pseudo-random". Accordingly, AP1 and AP2 may be provided with the same pseudo-random backoff time period T_{R} by utilizing the same algorithm and seed for generating the pseudo-random backoff time period T_{R}. The same algorithm, but a different seed may be utilized by AP3 and AP4. The coordination of the pseudo-random backoff time period T_{R} for the different subnetworks may thus be achieved by configuring the communication devices of one subgroup with the same seed while configuring the communication devices of different subgroups with different seeds. This configuration could be accomplished by a centralized control node, such as the control node 200. For example, the control node 200 could provide the AP1 and AP2 with the same seed, while another control node (not illustrated) could provide AP3 and AP4 with another seed. In some cases, it is also possible that the same control node provides AP1 and AP2 with the same seed, and AP3 and AP4 with another seed.

In the above scenarios, various ways may be utilized to convey control information indicating the pseudo-random backoff time period T_{R} or the seed to the communication devices. For example, such information could be broadcast to the communication devices of the same subnetwork. Further, the control information could be included in dedicated messages to each communication device.

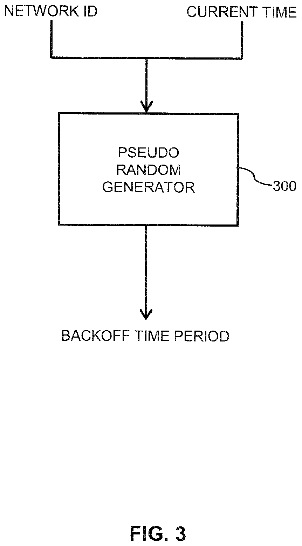

In some scenarios, utilizing the same seed and algorithm in the communication devices of the same subnetwork may not be sufficient. For example, AP1 and AP2 may have originally used the same seed, but the transmission of AP2 may have been deferred due to the transmission of another communication device, which was not detected by AP1. This may cause AP2 to newly generate the pseudo-random backoff time period T_{R}, while AP1 continues with the original pseudo-random backoff time period T_{R}. Thus AP1 and AP2 would determine the pseudo-random backoff time period T_{R} from the same pseudo-random sequence, but from different positions of the sequence. This may be addressed by regularly updating the seed of the algorithm to achieve the same state for each communication device of the subnetwork. A corresponding example of generating the pseudo-random backoff time period T_{R} is illustrated in Fig. 3.

In the example of Fig. 3, the seed is set in a controlled manner at each relevant time instance. More specifically, the communication devices of the same subnetwork are assumed to be time-synchronized and have a method to get a current time with the same accuracy, which is typically the case for LTE networks. As illustrated, the current time may be used as a first seed of the algorithm implemented by a pseudo-random number generator 300 which generates the pseudo-random backoff time period T_{R}. Further, a network identity (network ID) common to all nodes of the subnetwork, but different from other subnetworks, is utilized as a second seed of the algorithm.

In some scenarios, coordination of the pseudo-random backoff time period T_{R} may also be achieved in a distributed manner by transmission of control information between the communication devices. This control information may allow for obtaining the same pseudo-random backoff time period T_{R} for communication devices of the same subnetwork, while obtaining different pseudo-random backoff time periods T_{R} for communication devices of different subnetworks.

As illustrated in the exemplary scenario of Fig. 2, each transmission by a communication device may involve sending a preamble before the actual data. In Fig. 2, AP1 transmits a preamble and AP2 transmits a preamble. The preamble may include the control information for coordinating the generation of the pseudo-random backoff time period T_{R}. For example, the preamble may include the network ID number and current state of the algorithm for pseudo-random generation of the backoff time period T_{R}. The communication devices receiving the preamble may determine from the network ID whether they belong to the same subnetwork and may then set their algorithm for generating future pseudo-random backoff time periods T_{R} according to the received state. The state of the algorithm does not need to be included in every transmission by the communication device. For example, the state could be included in a preconfigured periodic pattern. Further, the preamble could be of variable length and the communication device may include the state of the algorithm only when the preamble is long enough to accommodate the inclusion.

A more detailed process may be as follows: When one of the communication devices, e.g., AP1, selects the transmission resources for utilization, it may first monitor the transmission resources to check whether the transmission resources are already utilized by other communication devices, such as AP2, AP3, or AP4. If the communication device detects utilization of the transmission resources by one or more other communication devices from the same subnetwork, such as by AP2, it may adopt the state of the algorithm indicated by the other communication device for its own algorithm for pseudo-random generation of the backoff time period T_{R}. Accordingly, the states of the algorithms for pseudo-random generation of the backoff time period T_{R} will be coordinated to be the same for communication devices from the same subnetwork, e.g., for AP1 and AP2. If the communication device detects no utilization of the transmission resources by communication devices of the same subnetwork, it may select a local input to set the state of its algorithm for pseudo-random generation of the backoff time period T_{R}. By way of example, such local input may be the current time, the network ID, the node ID, a serial number of the communication device, or a random number. Further, if the communication device detects utilization of the transmission resources by communication devices of another subnetwork, such as AP3 or AP4, the communication device may set the state of its algorithm for pseudo-random generation of the backoff time period T_{R} to be different from that indicated in the preamble transmitted by the other communication device. This may ensure that communication devices of different subnetworks apply different pseudo-random backoff time periods T_{R}.

A UE associated with an access node of one of the subnetworks, such as the UE 10, may obtain the state of the algorithm for pseudo-random generation of the backoff time period T_{R} from this access node. The UE may also transmit the state of its algorithm for pseudo-random generation of the backoff time period T_{R} in a preamble before it transmits data on the transmission resources and in this way indicate its network ID and the current state of the algorithm. The UE may be instructed by its serving access node to transmit such preamble in a periodic manner or on a one-time basis, e.g., via a physical layer command or higher layer signaling such as in an RRC (Radio Resource Control) command. The access node may select UEs that are farther away from the access node for such preamble transmission. The access node can determine the distance to the UE based on various kinds of metric, e.g., based on timing advance measurements and/or transmission power level measurements.

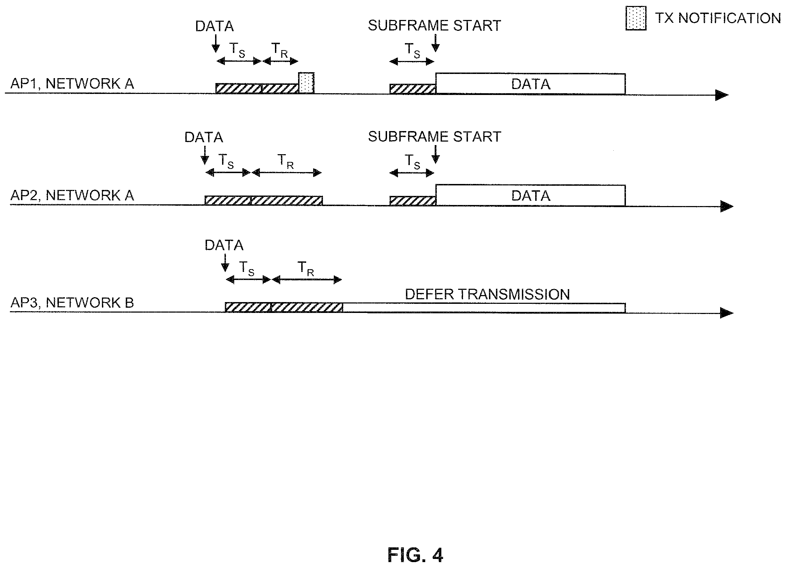

In alternative scenarios, the pseudo-random generation of the backoff time period T_{R} may be accomplished independently by each communication device, i.e., without coordination of the applied backoff time periods T_{R}, and control information indicating a time instance of an upcoming transmission may be utilized for achieving the synchronization of the transmissions by the communication devices of the same subnetwork. A corresponding exemplary scenario is illustrated in Fig. 4.

The scenario of Fig. 4 involves the communication devices AP1, AP2, AP3, corresponding to the communication devices 100-1, 100-2, 100-3 of Fig. 1. In the scenario of Fig. 4, it is assumed that AP1 and AP2 are assigned to one subnetwork (network A) and that AP3 is assigned to another subnetwork (network B). Each communication device applies an independently generated and thus different value of the pseudo-random backoff time period T_{R}. In the illustrated example, the pseudo-random backoff time period T_{R} applied by AP1 is shorter than the pseudo-random backoff time periods T_{R} applied by AP2 and AP3, which results in AP1 first deciding to starting its transmission after the backoff time period T_{R}. Before the transmission, AP1 sends a TX (transmit) notification which indicates the upcoming transmission. This TX notification enables AP2 to synchronize its transmission with the transmission of AP1. Further, the TX notification causes AP3 to defer its transmission of data. The TX notification may implicitly indicate the time instance of the upcoming transmission by AP1. For example, the TX notification may implicitly indicate that the upcoming transmission starts at the beginning of the next or later subframe. Further, the TX notification may indicate a network ID of the communication device which sends the TX notification. This network ID may allow other communication devices to decide whether the upcoming transmission is from a communication device of the same subnetwork or from a communication device from another subnetwork.

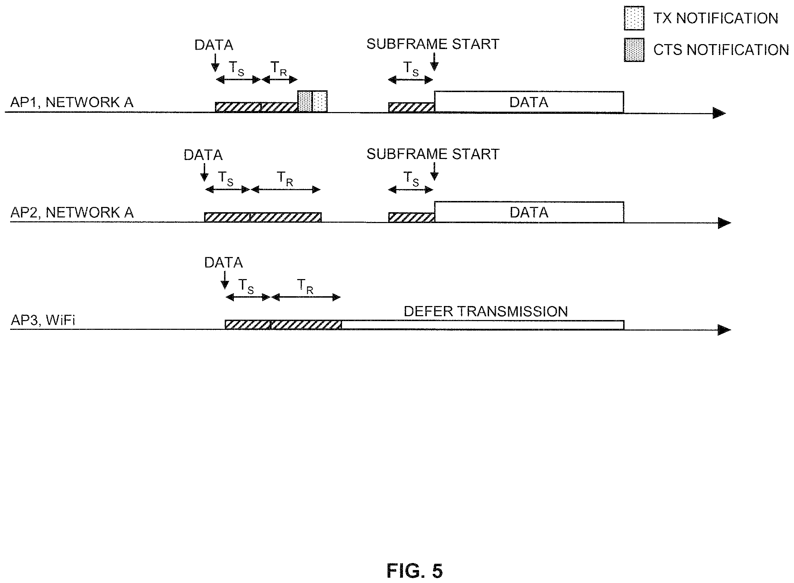

In the scenario of Fig. 4, the communication devices first check whether the transmission resources are free, as illustrated by the first sensing time T_{S} after the arrival of data to be transmitted. If the transmission resources are found to be free, the communication device waits for the backoff time period T_{R} and then sends the TX notification. The TX notification is sent sufficiently early before the actual transmission of data so that it is possible to perform an additional check for usage of the transmission resources by other communication devices before the actual transmission of data, as illustrated by the sensing time Ts before the transmission of data by AP1 and AP2. A time interval between sending the TX notification and the transmission of data is thus longer than the sensing time Ts. In this way, it can be ensured that no other communication device has started utilizing the transmission resources after the TX notification was sent. By sending the TX notification early as illustrated in Fig. 4, the other communication devices are provided with time which may be allowed for coordinating their action, such as scheduling the synchronous transmission by AP2. Further, sending the TX notification early may facilitate its combination with other notifications, such as a CTS (Clear to Send) notification as used in WiFi networks. An exemplary scenario in which the TX notification is combined with a CTS notification is illustrated in Fig. 5.

The scenario of Fig. 5 is generally similar to that of Fig. 4. In the scenario of Fig. 5 it is however assumed that AP3 is a WiFi communication device. AP1 and AP2 may correspond to LA-LTE communication devices.

As illustrated, in addition to sending the TX notification, AP1 also sends a CTS notification. The CTS notification may be sent immediately after or immediately before the TX notification. As explained in connection with Fig. 4, AP2 may use the TX notification for synchronizing its transmission with the transmission by AP1. AP3 may in turn decide on the basis of the CTS notification to defer its transmission. Additional functionalities for interpreting the TX notification are thus not required for AP3.

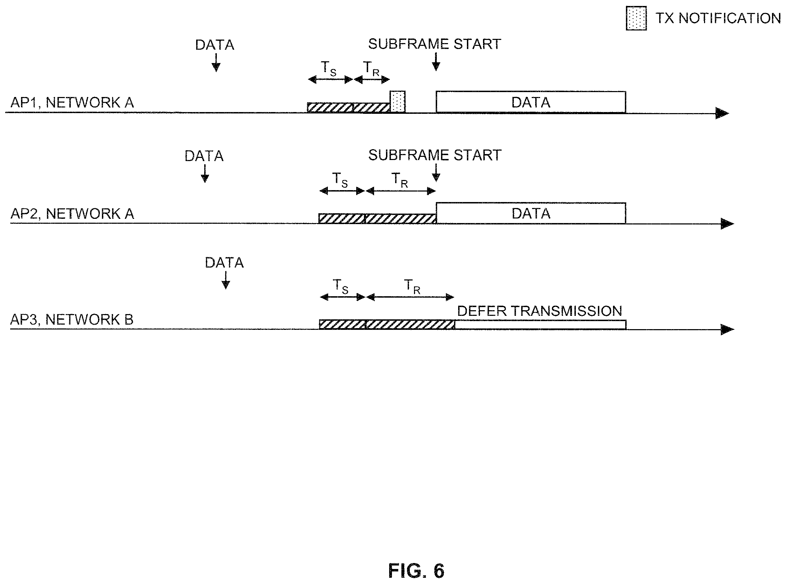

In other scenarios, the TX notification may be sent shortly before the upcoming transmission of data, with a time interval between sending the TX transmission being longer than the sensing time T_{S}. A corresponding exemplary scenario is illustrated in Fig. 6. The scenario of Fig. 6 is generally similar to that of Fig. 4, however without the additional check for usage of the transmission resources immediately before starting the transmission by AP 1 and AP2.

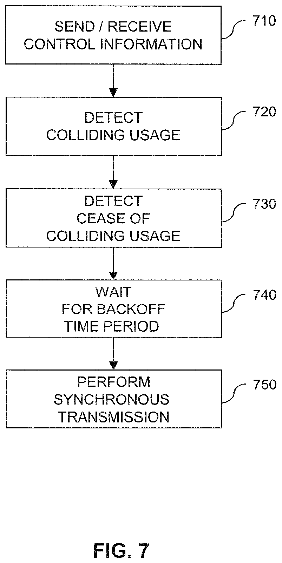

Fig. 7 shows a flowchart for illustrating a method of controlling transmissions in a communication network, e.g., having structures as illustrated in Fig. 1. The method of Fig. 7 may be used for implementing the above-described concepts in a communication device, e.g., in an access node, such as one of the access nodes 100-1, 100-2, 100-3, 100-4, or in a UE, such as the UE 10. If a processor based implementation of the communication device is used, the steps of the method may be performed by one or more processors of the communication device. For this purpose, the processor(s) may execute correspondingly configured program code. Further, at least some of the corresponding functionalities may be hardwired in the processor(s).

At step 710, the communication device may receive control information. Further, the communication device may also send control information. As further explained below, the control information may have the purpose of enabling synchronization of transmissions by the communication device with further transmissions by at least one other communication device.

At step 720, the communication device detects potentially colliding usage of transmission resources. The transmission resources may for example correspond to one or more carriers, e.g., from an unlicensed frequency band. The colliding usage may for example be detected by measuring an energy level on the transmission resources and comparing the measured energy level to a threshold. Such measurement may be performed over a certain time window, e.g., corresponding to the above-mentioned sensing time Ts.

At step 730, the communication device detects cease of the potentially colliding usage of the transmission resources. Again, this may involve measuring an energy level on the transmission resources and comparing the measured energy level to the threshold, and the measurement may be performed over the same time window as mentioned in connection with step 710.

At step 740, the communication device waits at least for a backoff time period starting when detecting the cease of the usage of the transmission resources at step 730. The backoff time period may be determined by the communication device on the basis of a pseudo-random value. Alternatively, the backoff time period could be indicated to the communication device, e.g., by a control node such as the control node 200.

At step 750, the communication device performs a transmission on the transmission resources synchronously with a further transmission on the transmission resources by the at least one other communication device. For this purpose, the communication device may utilize the control information sent or received at step 710.

In some scenarios, the communication device may receive the control information from the at least one other communication device. For example, the control information may then include a seed for pseudo-random determination of the backoff time period as utilized by the at least one other communication device, e.g., as explained in connection with the distributed scenario of Figs. 2 and 3. Alternatively, the received control information may include an indication of a time instance of the further transmission and/or the sent control information may include an indication of a time instance of the transmission by the communication device. An example of such indication is the TX notification explained in connection with Figs. 4, 5, and 6.

In some scenarios, the communication device may also receive the control information from a node which is responsible for controlling the communication device and the at least one further communication device, such as from the control node 200. For example, the control information may then include a seed for pseudo-random determination of the backoff time period. To enable the synchronization, the node may provide the same seed to both the communication device and to the further communication device. An example of corresponding processes is as explained in connection with the centralized scenario of Figs. 2 and 3. Further, the control information could also directly indicate the backoff time period, e.g., as determined by an algorithm implemented at the node.

In both the centralized scenario and the distributed scenario, the seed for pseudo-random determination of the backoff time period may be based on a network ID and/or a current time. Further, the communication device may update the seed on a regular basis, e.g., on the basis of newly received control information or by sending new control information.

When the control information indicates a time instance of the transmission by the at least one further communication device, a time interval between receipt of the control information by the communication device and the transmission by the communication device may be larger than a sensing time for detecting usage of the transmission resources, such as explained connection with the scenarios of Figs 4 and 5. Before performing the transmission on the transmission resources, the communication device may then recheck for potentially colliding usage of the transmission resources. This recheck may be utilized by the communication device to performing the transmission only in response to detecting no usage of the transmission resources by one or more other communication devices. Alternatively, a time interval between receipt of the control information by the communication device and the transmission by the communication device may be shorter than a sensing time for detecting usage of the transmission resources, such as explained in connection with the scenario of Fig. 6.

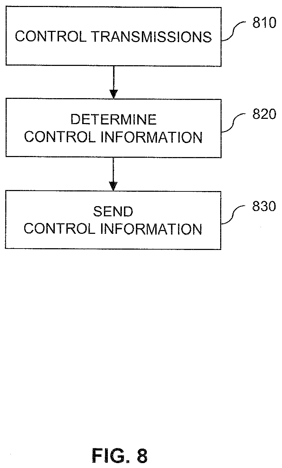

Fig. 8 shows a flowchart for illustrating a method of controlling transmissions in a communication network, e.g., having structures as illustrated in Fig. 1. The method of Fig. 8 may be used for implementing the above-described concepts in a node which is responsible for controlling multiple communication devices, such as the control node 200. The communication devices may for example correspond to access nodes, such as the access nodes 100-1, 100-2, 100-3, 100-4, or to UEs, such as the UE 10. If a processor based implementation of the node is used, the steps of the method may be performed by one or more processors of the node. For this purpose, the processor(s) may execute correspondingly configured program code. Further, at least some of the corresponding functionalities may be hardwired in the processor(s).

At step 810, the node may control the communication devices. This may for example involve sending various kinds of control information to the communication devices.

At step 820, the node determines control information for synchronizing transmissions by the multiple communication devices. The control information may include a seed for pseudo-random determination of the backoff time period. To enable the synchronization, the node may provide the same seed to both the communication device and to the further communication device. An example of corresponding processes is as explained in connection with the centralized scenario of Figs. 2 and 3. Further, the control information could also directly indicate the backoff time period, e.g., as determined by an algorithm implemented at the node.

The seed for pseudo-random determination of the backoff time period may be based on a network ID and/or a current time. Further, the node may update the seed on a regular basis, e.g., by determining and sending new control information.

At step 830, the node sends the control information to the communication devices. For example, this may be accomplished by broadcasting the control information to the communication devices or by sending a dedicated message to each of the communication devices.

It should be noted that the steps of the methods of Figs. 7 and 8 do not necessarily need to be performed in the illustrated order. For example, the control information of step 710 in Fig. 7 could also be sent after detecting the cease of the potentially colliding usage in step 730. One example of such scenario is sending the control information in the form of a TX notification as explained in connection with the scenarios of Figs. 4, 5, and 6.

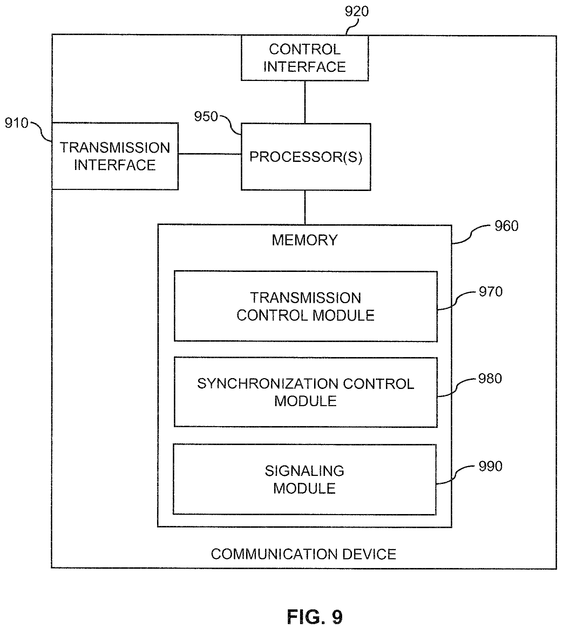

Fig. 9 illustrates exemplary structures for implementing a communication device which operates in accordance with the above-described concepts. For example, the illustrated structures may be used to implement one of the access nodes 100-1, 100-2, 100-3, 100-4 or the UE 10.

As illustrated, the communication device may include a transmission interface 910 for performing transmissions in the communication network. For example, the transmission interface 910 may correspond to a radio interface, e.g., on the basis of a cellular radio technology, such as the LTE technology. Further, the communication device may include a control interface 920. The control interface 920 may for example have the purpose allowing remote control or configuration of the communication device.

Further, the communication device includes one or more processor(s) 950 coupled to the interfaces 910, 920 and a memory 960 coupled to the processor(s) 950. The memory 960 may include a read-only memory (ROM), e.g., a flash ROM, a random access memory (RAM), e.g., a dynamic RAM (DRAM) or static RAM (SRAM), a mass storage, e.g., a hard disk or solid state disk, or the like. The memory 960 includes suitably configured program code modules to be executed by the processor(s) 950 so as to implement the above-described functionalities of the communication device, e.g., as illustrated by the method of Fig. 7. The program code modules in the memory 960 may include a transmission control module 970 so as to implement the above-described functionalities of controlling transmissions, e.g., by detecting potentially colliding usage of the transmission resources and waiting for the backoff time period before performing the transmission, e.g., as explained in connection with steps 720, 730, 740, and 750 of Fig. 7. Further, the program code modules in the memory 960 may include a synchronization control module 980 so as to implement the above-described functionalities of synchronizing the transmission with the further transmission, e.g., as explained in connection with step 750 of Fig. 7. Further, the program code modules in the memory 960 may include a signaling module 990 so as to implement the above-described functionalities of receiving or sending control information for enabling the synchronization.

It is to be understood that the structures as illustrated in Fig. 9 are merely schematic and that the communication device may actually include further components which, for the sake of clarity, have not been illustrated, e.g., further interfaces or further processors. Also, it is to be understood that the memory 960 may include further types of program code modules, which have not been illustrated, e.g., program code modules for implementing known functionalities of an access node or UE. In some implementations, also a computer program may be provided for implementing functionalities of the communication device, e.g., in the form of a physical medium storing the program code modules to be stored in the memory 960 or by making such program code available for download or streaming.

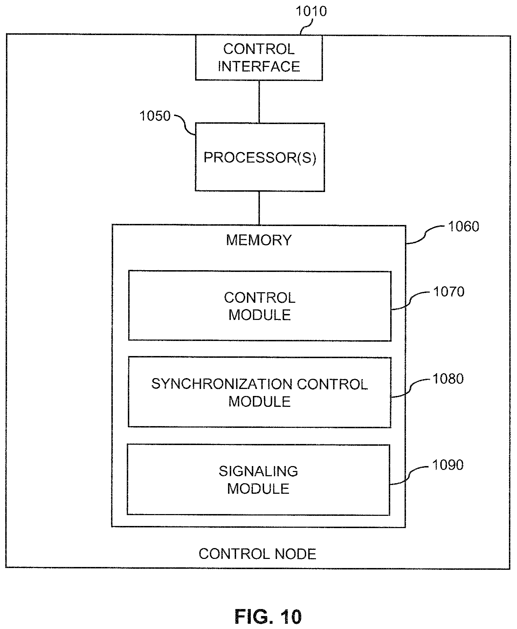

Fig. 10 illustrates exemplary structures for implementing a control node which operates in accordance with the above-described concepts. For example, the illustrated structures may be used to implement the control node 200.

As illustrated, the control node may include a control interface 1010. The control interface 1010 may have the purpose of controlling or configuring multiple communication devices of a communication network.

Further, the communication device includes one or more processor(s) 1050 coupled to the interface 1010 and a memory 1060 coupled to the processor(s) 1050. The memory 1060 may include a ROM, e.g., a flash ROM, a RAM, e.g., a DRAM or SRAM, a mass storage, e.g., a hard disk or solid state disk, or the like. The memory 1060 includes suitably configured program code modules to be executed by the processor(s) 1050 so as to implement the above-described functionalities of the control node, e.g., as illustrated by the method of Fig. 8. The program code modules in the memory 1060 may include a control module 1070 so as to implement the above-described functionalities of controlling communication devices, e.g., by sending various kinds of control information. Further, the program code modules in the memory 1060 may include a synchronization control module 1080 so as to implement the above-described functionalities of enabling synchronization of the transmissions by multiple communication devices controlled by the control node, e.g., by determining corresponding control information as explained in connection with step 850 of Fig. 8. Further, the program code modules in the memory 1060 may include a signaling module 1090 so as to implement the above-described functionalities of sending the control information for enabling the synchronization to the communication devices.

It is to be understood that the structures as illustrated in Fig. 10 are merely schematic and that the control node may actually include further components which, for the sake of clarity, have not been illustrated, e.g., further interfaces or further processors. Also, it is to be understood that the memory 1060 may include further types of program code modules, which have not been illustrated, e.g., program code modules for implementing known functionalities of a control node. In some implementations, also a computer program may be provided for implementing functionalities of the control node, e.g., in the form of a physical medium storing the program code modules to be stored in the memory 1060 or by making such program code available for download or streaming.

As can be seen, the concepts as described above may be used for efficiently avoiding undesired collisions on certain transmission resources while at the same time allowing efficient reuse of the transmission resources.

It is to be understood that the examples and embodiments as explained above are merely illustrative and susceptible to various modifications. For example, the concepts may be applied in various kinds of communication networks, without limitation to the illustrated example of a cellular network or radio networks. For example, the concepts could also be applied to various kinds of wire-based communication networks. Moreover, it is to be understood that the above concepts may be implemented by using correspondingly designed software to be executed by one or more processors of an existing device, or by using dedicated hardware.

## Claims

1. A method of controlling transmission in a communication network, the method comprising:
a communication device (10, 100-1, 100-2) detecting potentially colliding usage of transmission resources;
the communication device (10, 100-1, 100-2) detecting cease of the potentially colliding usage of the transmission resources;
after expiry of a backoff time period starting when detecting said cease of said usage of the transmission resources, the communication device (10, 100-1, 100-2) performing a transmission on the transmission resources synchronously with a further transmission on the transmission resources by at least one other communication device (10, 100-1, 100-2); and
the communication device (10, 100-1, 100-2) receiving control information for synchronizing the transmission with the further transmission.

2. The method according to claim 1, comprising:
the communication device (10, 100-1, 100-2) receives the control information from the at least one other communication device (10, 100-1, 100-2).

3. The method according to claim 1,
wherein the communication device (10, 100-1, 100-2) receives the control information from a control node (200) which is responsible for controlling the communication device (10, 100-1, 100-2) and the at least one further communication device (10, 100-1, 100-2).

4. The method according to any one of the preceding claims, comprising:
the communication device (10, 100-1, 100-2) sending control information for synchronizing the transmission with the further transmission to the at least one further communication device (10, 100-1, 100-2).

5. The method according to any one of claims 1 to 4,
wherein the control information comprises a seed for pseudo-random determination of the backoff time period.

6. The method according to claim 5,
wherein the communication device (10, 100-1, 100-2) updates the seed on a regular basis, and /or
wherein the seed is based on a network identity associated with the communication device and the at least one further communication device, and/or
wherein the seed is based on a current time.

7. The method according to claim 1 or 2,
wherein the control information comprises an indication of a time instance of the further transmission.

8. The method according to claim 7,
wherein a time interval between receipt of the control information by the communication device (10, 100-1, 100-2) and the transmission by the communication device (10, 100-1, 100-2) is larger than a sensing time for detecting usage of the transmission resources.

9. The method according to claim 4, comprising:
wherein the control information comprises an indication of a time instance of the transmission.

10. The method according to claim 9,
wherein a time interval between sending of the control information by the communication device (10, 100-1, 100-2) and the transmission by the communication device (10, 100-1, 100-2) is larger than a sensing time for detecting usage of the transmission resources.

11. The method according to claim 8 or 10, comprising:
before performing the transmission on the transmission resources, the communication device (10, 100-1, 100-2) rechecking for potentially colliding usage of the transmission resources, and
the communication device (10, 100-1, 100-2) performing the transmission only in response to detecting no usage of the transmission resources by one or more other communication devices (100-3).

12. A method of controlling transmission in a communication network, the method comprising:
a node (200) of the communication network providing control information to multiple communication devices (10, 100-1, 100-2) performing transmissions on transmission resources after a backoff time period starting when detecting cease of potentially colliding usage of the transmission resources,
wherein the control information enables synchronization of the transmissions by the communication devices (10, 100-1, 100-2).

13. The method according to claim 12,
wherein the control information comprises a seed for pseudo-random determination of the backoff time period.

14. The method according to claim 13,
wherein the node (200) updates the seed on a regular basis, and/or
wherein the seed is based on a network identity associated with the communication device and the at least one further communication device, and/or
wherein the seed is based on a current time.

15. A communication device (10, 100-1, 100-2), the communication device (100-1, 100-2) comprising:
at least one interface (910) for transmissions on transmission resources; and
at least one processor (950), the at least one processor (950) being configured to:
- detect potentially colliding usage of the transmission resources;
- detect cease of the potentially colliding usage of the transmission resources;
- after expiry of a backoff time period starting when detecting said cease of said usage of the transmission resources, perform a transmission on the transmission resources synchronously with a further transmission on the communication transmission resources by at least one other communication device (10, 100-1, 100-2); and
to receive control information for synchronizing the transmission with the further transmission.

16. A communication network comprising:
multiple communication devices (10, 100-1, 100-2) and a node (200) for a communication network, the node (200) comprising:
an interface (1010) for controlling multiple communication devices (10, 100-1, 100-2); and
at least one processor (1050) the at least one processor (1050) being configured to:
- provide control information to the multiple communication devices (10, 100-1, 100-2),
wherein the multiple communication devices (10, 100-1, 100-2) are configured to perform transmissions on transmission resources after a backoff time period starting when detecting cease of potentially colliding usage of the transmission resources, and
wherein the control information enables synchronization of the transmissions by the multiple communication devices (100-1, 100-2).

## Patentansprüche

1. Verfahren zur Steuerung von Übertragung in einem Kommunikationsnetzwerk, wobei das Verfahren umfasst, dass:
eine Kommunikationsvorrichtung (10, 100-1, 100-2) eine potenziell kollidierende Nutzung von Übertragungsressourcen erkennt;
die Kommunikationsvorrichtung (10, 100-1, 100-2) ein Ende der potenziell kollidierenden Nutzung der Übertragungsressourcen erkennt;
die Kommunikationsvorrichtung (10, 100-1, 100-2) nach Ablauf einer Backoff-Zeitdauer, die bei Erkennen des Endes der Nutzung der Übertragungsressourcen beginnt, eine Übertragung auf den Übertragungsressourcen synchron mit einer weiteren Übertragung auf den Übertragungsressourcen durch mindestens eine andere Kommunikationsvorrichtung (10, 100-1, 100-2); durchführt, und
die Kommunikationsvorrichtung (10, 100-1, 100-2) Steuerinformationen zum Synchronisieren der Übertragung mit der weiteren Übertragung empfängt.

2. Verfahren nach Anspruch 1, umfassend, dass:
die Kommunikationsvorrichtung (10, 100-1, 100-2) die Steuerinformationen von der mindestens einen anderen Kommunikationsvorrichtung (10, 100-1, 100-2) empfängt.

3. Verfahren nach Anspruch 1,
wobei die Kommunikationsvorrichtung (10, 100-1, 100-2) die Steuerinformationen von einem Steuerknoten (200) empfängt, der für das Steuern der Kommunikationsvorrichtung (10, 100-1, 100-2) und der mindestens einen weiteren Kommunikationsvorrichtung (10, 100-1, 100-2) verantwortlich ist.

4. Verfahren nach einem der vorhergehenden Ansprüche, umfassend, dass:
die Kommunikationsvorrichtung (10, 100-1, 100-2) Steuerinformationen zum Synchronisieren der Übertragung mit der weiteren Übertragung an die mindestens eine weitere Kommunikationsvorrichtung (10, 100-1, 100-2) sendet.

5. Verfahren nach einem der Ansprüche 1 bis 4,
wobei die Steuerinformationen einen Anfangswert zur pseudozufälligen Bestimmung der Backoff-Zeitdauer umfassen.

6. Verfahren nach Anspruch 5,
wobei die Kommunikationsvorrichtung (10, 100-1, 100-2) den Anfangswert auf einer regelmäßigen Basis aktualisiert, und/oder
wobei der Anfangswert auf einer Netzwerkkennung basiert, die mit der Kommunikationsvorrichtung und der mindestens einen weiteren Kommunikationsvorrichtung assoziiert ist, und/oder
wobei der Anfangswert auf einer aktuellen Zeit basiert.

7. Verfahren nach Anspruch 1 oder 2,
wobei die Steuerinformationen eine Angabe eines Zeitpunkts der weiteren Übertragung umfassen.

8. Verfahren nach Anspruch 7,
wobei ein Zeitintervall zwischen dem Empfang der Steuerinformationen durch die Kommunikationsvorrichtung (10, 100-1, 100-2) und der Übertragung durch die Kommunikationsvorrichtung (10, 100-1, 100-2) größer als eine Messzeit zum Erkennen der Nutzung der Übertragungsressourcen ist.

9. Verfahren nach Anspruch 4, umfassend:
wobei die Steuerinformationen eine Angabe eines Zeitpunkts der Übertragung umfassen.

10. Verfahren nach Anspruch 9,
wobei ein Zeitintervall zwischen dem Senden der Steuerinformationen durch die Kommunikationsvorrichtung (10, 100-1, 100-2) und der Übertragung durch die Kommunikationsvorrichtung (10, 100-1, 100-2) größer als eine Messzeit zum Erkennen der Nutzung der Übertragungsressourcen ist.

11. Verfahren nach Anspruch 8 oder 10, umfassend, dass:
die Kommunikationsvorrichtung (10, 100-1, 100-2) vor dem Durchführen der Übertragung auf den Übertragungsressourcen erneut auf eine potenziell kollidierende Nutzung der Übertragungsressourcen prüft, und
die Kommunikationsvorrichtung (10, 100-1, 100-2) die Übertragung nur in Reaktion auf ein Erkennen keiner Nutzung der Übertragungsressourcen durch eine oder mehrere andere Kommunikationsvorrichtungen (100-3) durchführt.

12. Verfahren zur Steuerung von Übertragung in einem Kommunikationsnetzwerk, wobei das Verfahren umfasst, dass:
ein Knoten (200) des Kommunikationsnetzwerks Steuerinformationen für mehrere Kommunikationsvorrichtungen (10, 100-1, 100-2) bereitstellt, die nach einer Backoff-Zeitdauer, die bei Erkennen des Endes einer potenziell kollidierenden Nutzung von Übertragungsressourcen beginnt, Übertragungen auf den Übertragungsressourcen durchführen,
wobei die Steuerinformationen Synchronisierung der Übertragungen durch die Kommunikationsvorrichtungen (10, 100-1, 100-2) ermöglichen.

13. Verfahren nach Anspruch 12,
wobei die Steuerinformationen einen Anfangswert zur pseudozufälligen Bestimmung der Backoff-Zeitdauer umfassen.

14. Verfahren nach Anspruch 13,
wobei der Knoten (200) den Anfangswert auf einer regelmäßigen Basis aktualisiert, und/oder
wobei der Anfangswert auf einer Netzwerkkennung basiert, die mit der Kommunikationsvorrichtung und der mindestens einen weiteren Kommunikationsvorrichtung assoziiert ist, und/oder
wobei der Anfangswert auf einer aktuellen Zeit basiert.

15. Kommunikationsvorrichtung (10, 100-1, 100-2), wobei die Kommunikationsvorrichtung (100-1, 100-2) umfasst:
mindestens eine Schnittstelle (910) für Übertragungen auf Übertragungsressourcen; und
mindestens einen Prozessor (950), wobei der mindestens eine Prozessor (950) konfiguriert ist zum:
- Erkennen von potenziell kollidierender Nutzung der Übertragungsressourcen;
- Erkennen des Endes der potenziell kollidierenden Nutzung der Übertragungsressourcen;
- Durchführen nach Ablauf einer Backoff-Zeitdauer, die bei Erkennen des Endes der Nutzung der Übertragungsressourcen beginnt, einer Übertragung auf den Übertragungsressourcen synchron mit einer weiteren Übertragung auf den Übertragungsressourcen durch mindestens eine andere Kommunikationsvorrichtung (10, 100-1, 100-2) ;
- Empfangen von Steuerinformationen zum Synchronisieren der Übertragung mit der weiteren Übertragung.

16. Kommunikationsnetzwerk, umfassend:
mehrere Kommunikationsvorrichtungen (10, 100-1, 100-2) und einen Knoten (200) für ein Kommunikationsnetzwerk, wobei der Knoten (200) umfasst:
eine Schnittstelle (1010) zum Steuern mehrerer Kommunikationsvorrichtungen (10, 100-1, 100-2); und
mindestens einen Prozessor (1050), wobei der mindestens eine Prozessor (1050) konfiguriert ist zum:
- Bereitstellen von Steuerinformationen für die mehreren Kommunikationsvorrichtungen (10, 100-1, 100-2) ,
wobei die mehreren Kommunikationsvorrichtungen (10, 100-1, 100-2) so konfiguriert sind, dass sie nach einer Backoff-Zeitdauer, die bei Erkennen des Endes einer potenziell kollidierenden Nutzung von Übertragungsressourcen beginnt, Übertragungen auf den Übertragungsressourcen durchführen, und
wobei die Steuerinformationen Synchronisierung der Übertragungen durch die Kommunikationsvorrichtungen (100-1, 100-2) ermöglichen.

## Revendications

1. Procédé de commande de transmission dans un réseau de communication, le procédé comprenant :
par un dispositif de communication (10, 100-1, 100-2), la détection d'une utilisation à collision potentielle de ressources de transmission ;
par le dispositif de communication (10, 100-1, 100-2), la détection d'un arrêt de l'utilisation à collision potentielle des ressources de transmission ;
après l'expiration d'une période de temps d'attente commençant lors de la détection dudit arrêt de ladite utilisation des ressources de transmission, la réalisation, par le dispositif de communication (10, 100-1, 100-2), d'une transmission sur les ressources de transmission de manière synchrone avec une autre transmission sur les ressources de transmission par au moins un autre dispositif de communication (10, 100-1, 100-2) ; et
par le dispositif de communication (10, 100-1, 100-2), la réception d'informations de commande pour synchroniser la transmission avec l'autre transmission.

2. Procédé selon la revendication 1, comprenant :
par le dispositif de communication (10, 100-1, 100-2), la réception des informations de commande en provenance de l'au moins un autre dispositif de communication (10, 100-1, 100-2).

3. Procédé selon la revendication 1,
dans lequel le dispositif de communication (10, 100-1, 100-2) reçoit les informations de commande en provenance d'un nœud de commande (200) qui est responsable de la commande du dispositif de communication (10, 100-1, 100-2) et de l'au moins un autre dispositif de communication (10, 100-1, 100-2).

4. Procédé selon l'une quelconque des revendications précédentes, comprenant :
par le dispositif de communication (10, 100-1, 100-2), l'envoi d'informations de commande pour synchroniser la transmission avec l'autre transmission à l'au moins un autre dispositif de communication (10, 100-1, 100-2).

5. Procédé selon l'une quelconque des revendications 1 à 4,
dans lequel les informations de commande comprennent un germe pour une détermination pseudo-aléatoire de la période de temps d'attente.

6. Procédé selon la revendication 5,
dans lequel le dispositif de communication (10, 100-1, 100-2) met à jour le germe de manière régulière, et/ou dans lequel le germe est basé sur une identité de réseau associée au dispositif de communication et à l'au moins un autre dispositif de communication, et/ou
dans lequel le germe est basé sur un temps actuel.

7. Procédé selon la revendication 1 ou 2,
dans lequel les informations de commande comprennent une indication d'une instance de temps de l'autre transmission.

8. Procédé selon la revendication 7,
dans lequel un intervalle de temps entre la réception des informations de commande par le dispositif de communication (10, 100-1, 100-2) et la transmission par le dispositif de communication (10, 100-1, 100-2) est supérieur à un temps de détection pour détecter une utilisation des ressources de transmission.

9. Procédé selon la revendication 4,
dans lequel les informations de commande comprennent une indication d'une instance de temps de la transmission.

10. Procédé selon la revendication 9,
dans lequel un intervalle de temps entre l'envoi des informations de commande par le dispositif de communication (10, 100-1, 100-2) et la transmission par le dispositif de communication (10, 100-1, 100-2) est supérieur à un temps de détection pour la détection d'une utilisation des ressources de transmission.

11. Procédé selon la revendication 8 ou 10, comprenant :
avant la réalisation de la transmission sur les ressources de transmission, la recherche à nouveau, par le dispositif de communication (10, 100-1, 100-2), d'une utilisation à collision potentielle des ressources de transmission, et
par le dispositif de communication (10, 100-1, 100-2), la réalisation de la transmission uniquement en réponse à la détection de l'absence d'utilisation des ressources de transmission par un ou plusieurs autres dispositifs de communication (100-3).

12. Procédé de commande de transmission dans un réseau de communication, le procédé comprenant :
un nœud (200) du réseau de communication fournissant des informations de commande à de multiples dispositifs de communication (10, 100-1, 100-2) réalisant des transmissions sur des ressources de transmission après une période de temps d'attente commençant lors de la détection d'un arrêt d'une utilisation à collision potentielle des ressources de transmission,
dans lequel les informations de commande permettent une synchronisation des transmissions par les dispositifs de communication (10, 100-1, 100-2).

13. Procédé selon la revendication 12,
dans lequel les informations de commande comprennent un germe pour une détermination pseudo-aléatoire de la période de temps d'attente.

14. Procédé selon la revendication 13,
dans lequel le nœud (200) met à jour le germe de manière régulière, et/ou
dans lequel le germe est basé sur une identité de réseau associée au dispositif de communication et à l'au moins un autre dispositif de communication, et/ou
dans lequel le germe est basé sur un temps actuel.

15. Dispositif de communication (10, 100-1, 100-2), le dispositif de communication (100-1, 100-2) comprenant :
au moins une interface (910) pour des transmissions sur des ressources de transmission ; et
au moins un processeur (950), l'au moins un processeur (950) étant configuré pour :
- la détection d'une utilisation à collision potentielle des ressources de transmission ;
- la détection d'un arrêt de l'utilisation à collision potentielle des ressources de transmission ;
- après l'expiration d'une période de temps d'attente commençant lors de la détection dudit arrêt de ladite utilisation des ressources de transmission, la réalisation d'une transmission sur les ressources de transmission de manière synchrone avec une autre transmission sur les ressources de transmission de communication par au moins un autre dispositif de communication (10, 100-1, 100-2) ; et
la réception d'informations de commande pour synchroniser la transmission avec l'autre transmission.

16. Réseau de communication comprenant :
de multiples dispositifs de communication (10, 100-1, 100-2) et un nœud (200) pour un réseau de communication, le nœud (200) comprenant :
une interface (1010) pour commander de multiples dispositifs de communication (10, 100-1, 100-2) ; et
au moins un processeur (1050), l'au moins un processeur (1050) étant configuré pour :
- la fourniture d'informations de commande aux multiples dispositifs de communication (10, 100-1, 100-2),
dans lequel les multiples dispositifs de communication (10, 100-1, 100-2) sont configurés pour la réalisation de transmissions sur des ressources de transmission après une période de temps d'attente commençant lors de la détection d'un arrêt d'une utilisation à collision potentielle des ressources de transmission, et
dans lequel les informations de commande permettent une synchronisation des transmissions par les multiples dispositifs de communication (100-1, 100-2).
